# EUROPEAN PATENT SPECIFICATION

(11) **EP 3 604 800 B1**
(45) Date of publication and mention of the grant of the patent: **14.06.2023**
(21) Application number: 18772149.3
(22) Date of filing: 16.03.2018
(51) Int. Cl.: F03D 3/02, F03D 13/25, F03D 3/00, B63B 21/50, B63B 35/44

(54) **FLOATING VERTICAL AXIS WIND TURBINE SYSTEM**
SCHWIMMENDES VERTIKALACHSIGES WINDTURBINENSYSTEM
SYSTÈME DE TURBINE ÉOLIENNE À AXE VERTICAL FLOTTANT

(30) Priority: 22.03.2017 JP 2017055677
(43) Date of publication of application: 05.02.2020
(73) Proprietor: UNIVERSITY PUBLIC CORPORATION OSAKA, Osaka-shi, Osaka 5450051 (JP)
(72) Inventor: NIHEI, Yasunori, Sakai-shi Osaka 599531 (JP); KITAMURA, Shinichi, Sakai-shi Osaka 599531 (JP)
(74) Representative: Plasseraud IP
(86) International application number: PCT/JP2018/010563
(87) International publication number: WO 2018/173967

(56) References cited:
- WO-A1-2014/015998
- DE-U1-202015 102 425
- FR-A1- 2 300 235
- JP-A- S54 137 539
- JP-A- S54 137 539
- JP-A- 2003 172 245
- JP-A- 2013 508 609

## Description

### TECHNICAL FIELD

The present invention relates to a floating vertical-axis wind turbine system including a plurality of vertical-axis wind turbines.

### BACKGROUND ART

A floating wind turbine system having floating bodies moored on a water surface such as a sea surface, and wind turbines respectively mounted on the floating bodies has been known. The floating wind turbine system is installed mostly for the purpose of wind power generation. The floating wind turbine system for wind power generation is required to improve power generation efficiency while reducing the cost of installation and maintenance of the floating wind turbine system in order to reduce power generation cost.

The floating wind turbine system is mainly composed of wind turbines, floating bodies, and mooring devices. Examples of the wind turbines used in the floating wind turbine system include a horizontal-axis wind turbine whose rotary shaft extends in a horizontal direction, and a vertical-axis wind turbine whose rotary shaft extends in a vertical direction. The floating body supports the wind turbine on the water surface by buoyancy. Usually, a single wind turbine is mounted on a single floating body. The wind turbine supported by the floating body is anchored to the bottom of the water by the mooring device to be moored at the water surface.

This configuration requires the floating body and the mooring device for each of the wind turbines, increasing the cost of the floating bodies and the mooring devices. Consequently, the installation cost of the floating wind turbine system increases relative to the power generation amount, making it difficult to reduce the power generation cost.

In order to reduce the installation cost of the floating wind turbine system, another floating wind turbine system including a plurality of wind turbines mounted on a single floating body has been proposed.

However, the plurality of wind turbines, if mounted on the single floating body, may interfere with each other depending on the direction of wind, and the power generation efficiency may decrease. For example, if an array of the wind turbines is made orthogonal to the wind direction and the wind turbines uniformly receive the wind, the wind turbines do not easily interfere with each other. However, if the wind direction changes and one of the wind turbines moves to the leeward side of another wind turbine among the plurality of wind turbines, the leeward wind turbine receives wind disturbed by the wind turbine on the windward side thereof. This leads to the decrease in power generation efficiency of the leeward wind turbine.

To cope with such a decrease in power generation efficiency caused by the change in the wind direction, a floating wind turbine system has been proposed in which floating bodies rotate in response to the change in wind direction, so that the array of a plurality of vertical-axis wind turbines is made orthogonal to the wind direction (see, for example, Japanese Translation of PCT International Application No. 2013-508609).

The floating wind turbine system disclosed by Japanese Translation of PCT International Application No. 2013-508609 includes a plurality of wind turbines mounted on a single floating body, and employs a multipoint mooring system in which a mooring line of a mooring device is connected to at least two points of the floating body. In addition, the mooring line of the mooring device has an adjustable length, and can be made longer, for example, so as to allow the floating body to rotate.

Further examples of wind turbine systems can be found for instance in DE 20 2015 102425 U1 or WO 2014/015998 A1.

### CITATION LIST

### PATENT DOCUMENT

Patent Document 1: Japanese Translation of PCT International Application No. 2013-508609

### SUMMARY OF THE INVENTION

### TECHNICAL PROBLEM

In the floating wind turbine system disclosed in Japanese Translation of PCT International Application No. 2013-508609, the mooring line is increased in length to allow the floating body to rotate. However, when the floating body rotates, the mooring line with the increased length may possibly become tangled. That is, the length of the mooring line is limited. Therefore, this system cannot cope with the situation in which the wind direction greatly changes, for example, when a sea wind and a land wind replace each other, and thus, the wind turbines may interference with one another.

Controlling the length of the mooring line can control the orientation of the floating body in response to the change in the wind direction. However, such control makes the configuration of the mooring device complicated, which may lead to the problem of increase in cost of the installation and maintenance of the floating wind turbine system.

In addition, if the mooring line is increased in length, the floating body easily moves on the water surface due to wind power, which increases the water area required for the installation of the floating wind turbine system. For this reason, the floating wind turbine system needs to be installed at a distance from other floating wind turbine systems or structures. This may limit the installation site of the floating wind turbine system.

The present invention intends to provide a floating vertical-axis wind turbine system including an array of a plurality of vertical-axis wind turbines, wherein the array of the plurality of vertical-axis wind turbines is made orthogonal to a wind direction in response to a great change in the wind direction, so that interference between the vertical-axis wind turbines can be reduced, and that a water area required for the installation of the floating vertical-axis wind turbine system can be reduced. In addition, the installation cost can be reduced by using a mooring device with a simple configuration.

### SOLUTION TO THE PROBLEM

The floating vertical-axis wind turbine system according to the invention is defined in appended claim 1.

### ADVANTAGES OF THE INVENTION

According to the floating vertical-axis wind turbine system of the present invention, an array of the plurality of vertical-axis wind turbines is made orthogonal to a wind direction in response to a great change in the wind direction, so that interference between the vertical-axis wind turbines can be reduced, and that a water area required for the installation of the floating vertical-axis wind turbine system can be reduced. In addition, the installation cost can be reduced by using a mooring device with a simple configuration.

### BRIEF DESCRIPTION OF THE DRAWINGS

[FIG. 1] FIG. 1 is a perspective view illustrating a floating vertical-axis wind turbine system according to a first embodiment of the present invention.
[FIG. 2] FIG. 2 is a plan view of the floating vertical-axis wind turbine system.
[FIG. 3] FIG. 3 is a plan view illustrating the operation of the floating vertical-axis wind turbine system.
[FIG. 4] FIG. 4 is a plan view illustrating the operation of the floating vertical-axis wind turbine system.
[FIG. 5] FIG. 5 is a plan view illustrating the operation of the floating vertical-axis wind turbine system.
[FIG. 6] FIG. 6 is a plan view illustrating the operation of the floating vertical-axis wind turbine system.
[FIG. 7] FIG. 7 is a plan view illustrating the operation of the floating vertical-axis wind turbine system.
[FIG. 8] FIG. 8 is a perspective view illustrating a floating wind turbine system according to a comparative example.
[FIG. 9] FIG. 9 is a plan view illustrating the operation of the floating wind turbine system according to the comparative example.
[FIG. 10] FIG. 10 is a plan view illustrating the operation of the floating wind turbine system according to the comparative example.
[FIG. 11] FIG. 11 is a plan view illustrating the operation of the floating wind turbine system according to the comparative example.
[FIG. 12] FIG. 12 is a plan view illustrating the operation of the floating wind turbine system according to the comparative example.
[FIG. 13] FIG. 13 is a plan view illustrating the operation of the floating wind turbine system according to the comparative example.
[FIG. 14A] FIG. 14A is a plan view illustrating a moving range of the floating vertical-axis wind turbine system according to the present embodiment.
[FIG. 14B] FIG. 14B is a plan view illustrating a moving range of the floating wind turbine system according to the comparative example.
[FIG. 15] FIG. 15 is a front view illustrating a variation of the floating vertical-axis wind turbine system.
[FIG. 16] FIG. 16 is a front view illustrating a variation of the floating vertical-axis wind turbine system.
[FIG. 17] FIG. 17 is a front view illustrating a variation of the floating vertical-axis wind turbine system.

### DESCRIPTION OF EMBODIMENTS

A floating vertical-axis wind turbine system according to an embodiment of the present invention includes the technical features defined in appended claim 1.

In this configuration, the wind turbine array including the plurality of vertical-axis wind turbines supported on the water surface by the floating body is moored at one point so as to be rotatable at the rotation center position. The rotation center position is set such that a moment of rotation about the rotation center position is canceled out in a state in which the wind turbine array is orthogonal to the direction of wind, i.e., in a state in which the wind turbine array faces the wind. In a case in which only the wind direction changes from the state in which the wind turbine array faces the wind direction, a moment of rotation about the rotation center position generated at the first end of the wind turbine array becomes different from a moment of rotation about the rotation center position generated at the second end of the wind turbine array, thereby causing imbalance between the moments of rotation about the rotation center position. This causes the wind turbine array to rotate to a position where the moments of rotation about the rotation center position at the first and second ends are balanced and cancel each other out, i.e., to a position where the wind turbine array faces the wind direction.

The wind turbine array is moored at one point so as to be rotatable at the rotation center position. Thus, even if the wind direction greatly changes, the wind turbine array rotates to face the wind direction in response to the change in the wind direction.
This allows the wind turbine array to keep facing the wind direction without using any driving force or control mechanism, and can block the plurality of vertical-axis wind turbines from interfering with each other.

Further, being moored at one point so as to be rotatable at the rotation center position, the wind turbine array rotates within a range of a circle centered on the rotation center position. This can reduce the water area required for the installation of the floating vertical-axis wind turbine system.

In addition, the mooring device and the wind turbine array are rotatably coupled to each other. The mooring device therefore has little effect on the rotation of the wind turbine array. This configuration can simplify the configuration of the mooring device, and can reduce the installation cost of the floating vertical-axis wind turbine system.

According to the invention,
assuming that a portion of the wind turbine array toward the first end with respect to the rotation center position is a first wind turbine array, and a portion of the wind turbine array toward the second end with respect to the rotation center position is a second wind turbine array,
the first wind turbine array and the second wind turbine array have an equal lateral area.

According to this configuration, the first and second wind turbine arrays have an equal lateral area with respect to the rotation center position. Thus, when the wind acts on the wind turbine array, the first and second wind turbine arrays receive an equal wind pressure, which allows the wind turbine array to easily face the wind direction.

The vertical-axis wind turbine constituting the first wind turbine array and the vertical-axis wind turbine constituting the second wind turbine array are the same in shape and number, and are arranged symmetrically with respect to the rotation center position,
blades of the vertical-axis wind turbine constituting the first wind turbine array and blades of the vertical-axis wind turbine constituting the second wind turbine array are arranged to rotate in opposite directions, and
the rotation center position is set to be a center of gravity of the wind turbine array.

According to this configuration, the first and second wind turbine arrays constituting the wind turbine array are symmetric with respect to the rotation center position (center of gravity). Thus, when the wind acts on the wind turbine array, the first and second wind turbine arrays receive an equal wind pressure, which allows the wind turbine array to easily face the wind direction. Further, the blades of the vertical-axis wind turbines constituting the first and second wind turbine arrays are configured to rotate in opposite directions. This allows the wind turbine array to easily face the wind direction using the moments of rotation generated by the rotation of the blades.

According to the invention, the floating body is provided for each of the vertical-axis wind turbines.

According to this configuration, the plurality of vertical-axis wind turbines are supported on the water surface by the floating body provided for each of the vertical-axis wind turbines. Thus, the configuration of the wind turbine array can be simplified. In addition, this configuration can easily address the case where multiple vertical-axis wind turbines need to be used, and the case where the number of vertical-axis wind turbines needs to be increased.

According to a preferred embodiment,
the mooring device may include:
a mooring line; and
a floating mooring body connected to the mooring line,
wherein
the wind turbine array may be rotatably moored to the floating mooring body at the rotation center position.

According to this configuration, the wind turbine array is moored to the floating mooring body provided for the mooring device. This configuration allows the wind turbine array to be easily moored to the mooring device which has been installed, and also allows the wind turbine array to be separated from the mooring device that is kept installed. This can facilitate the installation and maintenance of the floating vertical-axis wind turbine system.

### [First Embodiment]

A floating vertical-axis wind turbine system 100 according to a first embodiment of the present invention will be described in detail with reference to the drawings. Note that like reference characters designate identical or corresponding components in the drawings, and the description thereof will not be repeated. For easy understanding of the description, the drawings to be referred to below show the configuration which is simplified, schematically illustrated, or from which some constituents are omitted. Further, the dimension ratio between the constituents shown in the drawings does not necessarily indicate the actual dimension ratio.

### [General Configuration]

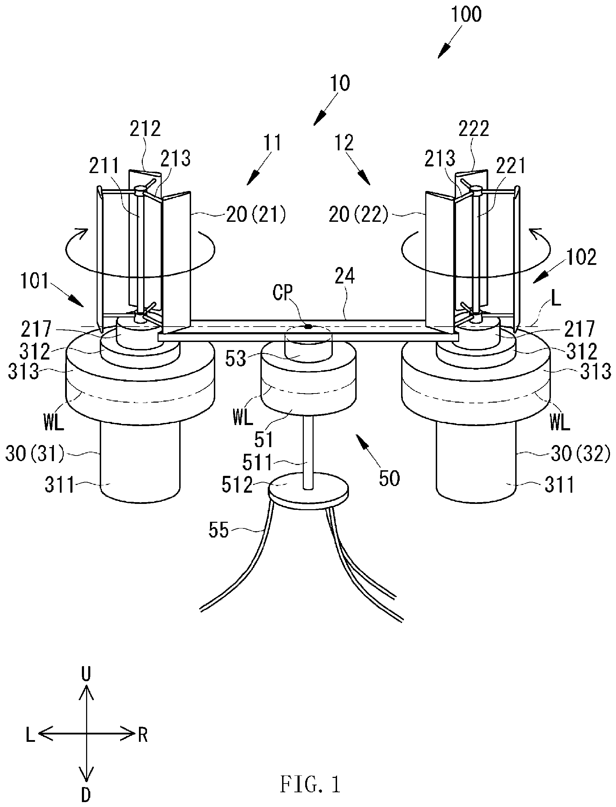

First, a general configuration for the floating vertical-axis wind turbine system 100 will be described below. FIG. 1 is a perspective view illustrating the floating vertical-axis wind turbine system 100 according to the first embodiment of the present invention. In the following drawings, arrow F indicates a forward direction of the floating vertical-axis wind turbine system 100, and arrow B indicates a backward direction. Arrow R indicates a right direction, and arrow L indicates a left direction. Arrow U indicates an upward direction, and arrow D indicates a downward direction.

The floating vertical-axis wind turbine system 100 includes a wind turbine array 10 and a mooring device 50. The wind turbine array 10 includes a plurality of vertical-axis wind turbines 20 (a first wind turbine 21 and a second wind turbine 22), and floating bodies 30 (a first floating support body 31 and a second floating support body 32) supporting the plurality of vertical-axis wind turbines 20. The first wind turbine 21 is mounted on the first floating support body 31, and the second wind turbine 22 is mounted on the second floating support body 32. The wind turbine array 10 is rotatably connected to the mooring device 50.

When the floating vertical-axis wind turbine system 100 is installed offshore, for example, the first and second wind turbines 21 and 22 are respectively supported on the water surface by the first and second floating support bodies 31 and 32. The wind turbine array 10 is moored by the mooring device 50 so as to be rotatable relative to the water surface. Phantom lines on the first floating support body 31, the second floating support body 32, and a floating mooring body 51 of the mooring device 50 represent an approximate waterline WL in a state in which the floating vertical-axis wind turbine system 100 is installed offshore. Constituents of the floating vertical-axis wind turbine system 100 will be described in detail below.

The wind turbine array 10 includes vertical-axis wind turbines 20 (the first and second wind turbines 21 and 22), a coupling member 24, and the floating bodies 30 (the first and second floating support bodies 31 and 32).

The first and second wind turbines 21 and 22 are so-called straight-bladed vertical-axis wind turbines. The first and second wind turbines 21 and 22 are configured substantially in the same manner, except that blades 212 of the first wind turbine 21 and blades 222 of the second wind turbine 22 rotate in different directions when they receive wind from the side. The blades 212 of the first wind turbine 21 rotate clockwise when viewed in plan, while the blades 222 of the second wind turbine 22 rotate counterclockwise when viewed in plan.

The first wind turbine 21 includes a rotary shaft 211 and the blades 212. The rotary shaft 211 extends in the vertical direction. Three blades 212 are arranged at equal intervals around the rotary shaft 211. Each of the blades 212 extends in the vertical direction, and is disposed parallel to the rotary shaft 211. The rotary shaft 211 and each blade 212 are connected by a bracket 213 which extends radially from the rotary shaft 211. Each blade 212 is able to rotate clockwise about the rotary shaft 211 when viewed in plan. A lower end portion of the rotary shaft 211 is supported by a bearing inside a casing 217, and connected to a generator (not shown) via a speed-increasing mechanism.

The second wind turbine 22 has substantially the same configuration as the first wind turbine 21, and includes a rotary shaft 221 and the blades 222. The rotary shaft 221 extends in the vertical direction. Three blades 222 are arranged at equal intervals around the rotary shaft 221. Each blade 222 extends in the vertical direction, and is disposed parallel to the rotary shaft 221. The rotary shaft 221 and each blade 222 are connected by a bracket 213 which extends radially from the rotary shaft 221. Each blade 222 is capable of rotating in a direction opposite to the rotating direction of the first wind turbine 21, i.e., counterclockwise about the rotary shaft 221 when viewed in plan. A lower end portion of the rotary shaft 221 is supported by a bearing inside a casing 217, and connected to a generator (not shown) via a speed-increasing mechanism.

The rotary shafts 211 and 221 of the first and second wind turbines 21 and 22 are the same in length, and the blades 221 and 222 are the same in shape, number, and radius of rotation. That is, the first and second wind turbines 21 and 22 have an equal lateral area, and are different only in the rotating direction of the blades 212 and 222.

When the first and second wind turbines 21 and 22 receive wind from the side, each of the blades 212 and 222 receives lift, and rotates about an associated one of the rotary shafts 211 and 221. A rotational force of each of the rotary shafts 211 and 221 is transmitted to the generator via the speed-increasing mechanism, and converted into electric power. The generated electric power is transmitted to the outside via a cable (not shown), or is stored in a battery (not shown) provided inside the casing 217.

In the present embodiment, so-called straight-bladed vertical-axis wind turbines are used as the first and second wind turbines 21 and 22. However, a vertical-axis wind turbine of any type may also be used. For example, a Darrieus wind turbine, a Savonius wind turbine, and a cross flow wind turbine may be used.

The coupling member 24 couples the first and second wind turbines 21 and 22. Suppose that a virtual straight line L extending in the horizontal direction is set on the coupling member 24, the first and second wind turbines 21 and 22 are arranged on the virtual straight line L. Specifically, the rotary shafts 211 and 221 of the first and second wind turbines 21 and 22 are arranged on the virtual straight line L. Note that the rotary shafts 211 and 221 do not have to be strictly arranged on the virtual straight line L, and may be arranged substantially on the virtual straight line L.

In the present embodiment, the first and second wind turbines 21 and 22 and the coupling member 24 are coupled together at the casings 217, but may be connected together at any other position except for the casings 217. For example, the floating bodies 30 (the first and second floating support bodies 31 and 32) respectively supporting the first and second wind turbines 21 and 22 may be coupled to the coupling member 24.

The floating body 30 supports the wind turbine array 10 on the water surface by buoyancy. In this embodiment, the floating body 30 is individually provided for each of the first and second wind turbines 21 and 22, and includes the first and second floating support bodies 31 and 32. The first floating support body 31 supports the first wind turbine 21, and the second floating support body 32 the second wind turbine 22.

The first and second floating support bodies 31 and 32 have substantially the same shape, and each of them has a lower floating body 311, an upper floating body 312, and an intermediate floating body 313. The lower and upper floating bodies 311 and 312 are cylindrical bodies of the same diameter. The intermediate floating body 313 is a cylindrical body having a larger diameter than the lower and upper floating bodies 311 and 312. The buoyancy of the first and second floating support bodies 31 and 32 is set such that the waterline WL comes to the level of the intermediate floating body 313 in a state in which the floating vertical-axis wind turbine system 100 is installed offshore. The shapes of the first and second floating support bodies 31 and 32 are not limited to those of the present embodiment.

Assuming that an end of the wind turbine array 10 toward the first wind turbine 21 is a first end 101, and that an end of the wind turbine array 10 toward the second wind turbine 22 is a second end 102, a rotation center position CP is set between the first end 101 and the second end 102 and on the virtual straight line L. The rotation center position CP is a position at which the wind turbine array 10 is rotatably connected to the mooring device 50.

The rotation center position CP is set at a position where a moment of rotation about the rotation center position CP is canceled out when the wind turbine array 10 is orthogonal to wind acted on the wind turbine array 10. The moment of rotation about the rotation center position CP is divided into moments of rotation generated by wind pressures respectively acting on the right and left of the rotation center position CP, and moments of rotation generated by reaction torques generated by the rotation of the blades 212 and 222 of the first and second wind turbines 21 and 22. Thus, in a state in which the wind turbine array 10 is orthogonal to (faces) the wind, the rotation center position CP is set at a position where the moments of rotation generated by the wind pressures and the moments of rotation generated by the reaction torques cancel each other out.

Suppose that a portion of the wind turbine array 10 toward the first end 101 is a first wind turbine array 11, and a portion of the wind turbine array 10 toward the second end 102 is a second wind turbine array 12. In order to cancel out the moments of rotation generated by the wind pressures, the rotation center position CP can be set such that a lateral area of the first wind turbine array 11 above the waterline WL and a lateral area of the second wind turbine array 12 above the waterline WL are symmetric with respect to the rotation center position CP.

In this embodiment, the first wind turbine 21 constituting the first wind turbine array 11 and the second wind turbine 22 constituting the second wind turbine array 12 are the same in shape and number (one). The first and second floating support bodies 31 and 32 respectively supporting the first and second wind turbines 21 and 22 have substantially the same shape. Therefore, if the rotation center position CP is set at an equal distance from the first and second wind turbines 21 and 22 and on the virtual straight line L of the coupling member 24, the moments of rotation about the rotation center position CP generated by the wind pressures cancel each other out.

Next, in order to cancel out the moments of rotation generated by the reaction torques, the reaction torques of the first and second wind turbines 21 and 22 may be set equal to each other and act in opposite directions in a state in which the wind turbine array 10 is orthogonal to (faces) the wind.

In this embodiment, the first and second wind turbines 21 and 22 are configured in the same manner, except for the rotating directions of the blades 212 and 222. Thus, in a state in which the wind turbine array 10 is orthogonal to (faces) the wind, the reaction torques of the first and second wind turbines 21 and 22 become equal, act in opposite directions, and thus, cancel each other out.

As described above, in the present embodiment, the rotation center position CP is set at the center of the wind turbine array 10 when viewed from the side, and on the virtual straight line L. In other words, in this embodiment, the rotation center position CP is set at the center of gravity of the wind turbine array 10.

The mooring device 50 moors the wind turbine array 10 at the rotation center position CP such that the wind turbine array 10 is rotatable relative to the water surface. The mooring device 50 includes a floating mooring body 51, a connector 53, and mooring lines 55.

The floating mooring body 51 is a cylindrical body, and has buoyancy that allows the waterline WL to come to the level of a side surface of itself in a state in which the floating vertical-axis wind turbine system 100 is installed offshore. A mooring shaft 511 extends downward from the bottom of the floating mooring body 51, and a mooring line support 512 is provided at a lower end of the mooring shaft 511. Note that the shape of the floating mooring body 51 is not limited to the shape described in the present embodiment.

The connector 53 is a portion which connects the wind turbine array 10 to the floating mooring body 51 so that the wind turbine array 10 is rotatable relative to the floating mooring body 51. The connector 53 is connected to the coupling member 24 so that the wind turbine array 10 is able to rotate about the rotation center position CP. A rotation mechanism of the connector 53 is not limited, and any known rotation mechanism can be used. However, in a preferred embodiment, the rotation mechanism is resistant to water and salt. In a case in which the electric power generated by the first and second wind turbines 21 and 22 is transmitted to the outside, the connector 53 is preferably provided with a slit ring.

The mooring line 55 is a member which moors the floating mooring body 51 to the bottom of the water. One end of the mooring line 55 is connected to the mooring line support 512. The other end of the mooring line 55 is connected to an anchor or the like (not shown). When the anchor or the like is thrown toward, and locked to, the bottom of the water, the mooring line 55 can moor the floating mooring body 51 to a certain range on the water surface. In the present embodiment, three mooring lines 55 are used, but the number is not limiting.

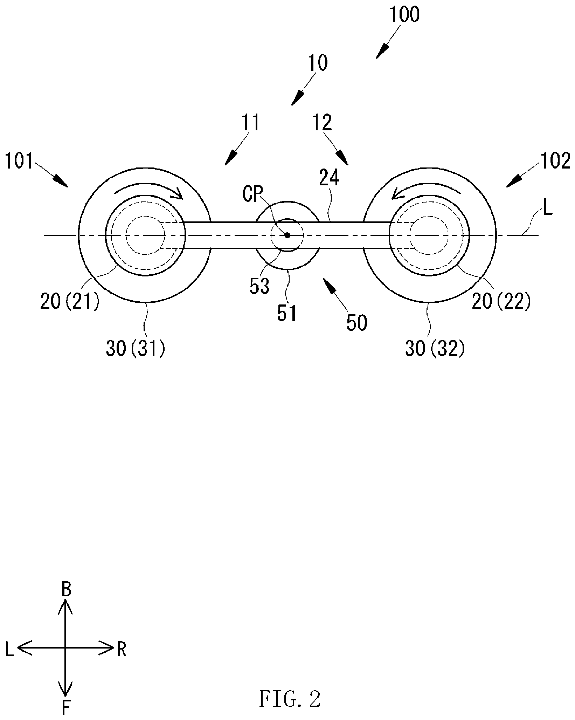

FIG. 2 is a plan view of the floating vertical-axis wind turbine system 100. As shown in FIG. 2, a virtual straight line L extending in the horizontal direction is set on the coupling member 24. The first and second wind turbines 21 and 22 are arranged on the virtual straight line L near both ends of the coupling member 24. The rotation center position CP is set between the first and second ends 101 and 102 of the wind turbine array 10 and on the virtual straight line L. In this embodiment, the rotation center position CP is set at the center of gravity of the wind turbine array 10. The connector 53 of the mooring device 50 is connected to the coupling member 24 at the rotation center position CP. While the blades 212 of the first wind turbine 21 rotate clockwise when viewed in plan, the blades 222 of the second wind turbine 22 rotate counterclockwise when viewed in plan.

### [Operation]

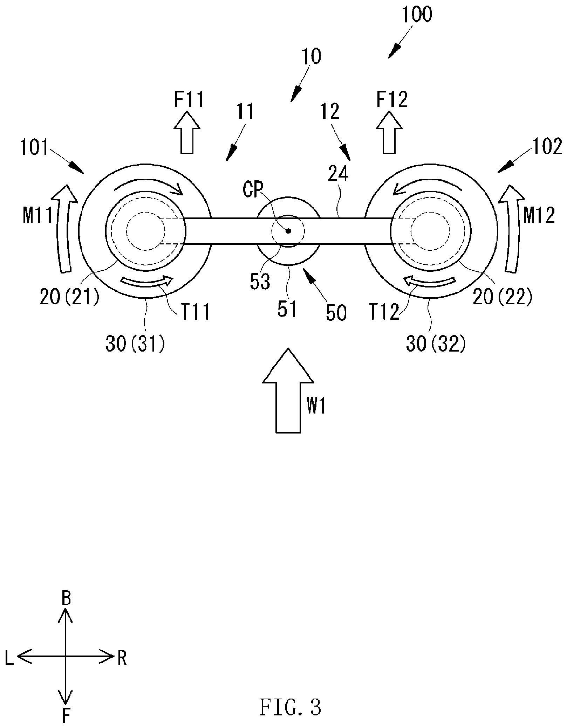

How the floating vertical-axis wind turbine system 100 installed offshore is operated when the wind direction changes will be described below. FIGS. 3 to 7 are plan views showing the operation of the floating vertical-axis wind turbine system 100.

FIG. 3 shows a state in which the floating vertical-axis wind turbine system 100 receives wind W1 blowing from the front to the back. The wind turbine array 10 is orthogonal to the wind W1. That is, the wind turbine array 10 faces the wind W1.

Receiving the wind W1 in this state, the first wind turbine array 11 experiences wind pressure F11, and the second wind turbine array 12 experiences wind pressure F12 which is equal in magnitude to the wind pressure F11. Thus, a moment of rotation M11 about the rotation center position CP generated by the wind pressure F11 and a moment of rotation M12 about the rotation center position CP generated by the wind pressure F12 are equal in magnitude and caused in opposite directions, and hence cancel each other out.

The first and second wind turbines 21 and 22 receive the wind W1 without interfering with each other, and the blades 212 of the first wind turbine 21 and the blades 222 of the second wind turbine 22 rotate in the opposite directions at equal speed. Therefore, a reaction torque T11 generated by the rotation of the first wind turbine 21 and a reaction torque T12 generated by the rotation of the second wind turbine 22 are equal in magnitude and caused in opposite directions, and hence cancel each other out.

Consequently, in the state shown in FIG. 3, the wind turbine array 10 keeps facing the wind W1 without rotating about the rotation center position CP.

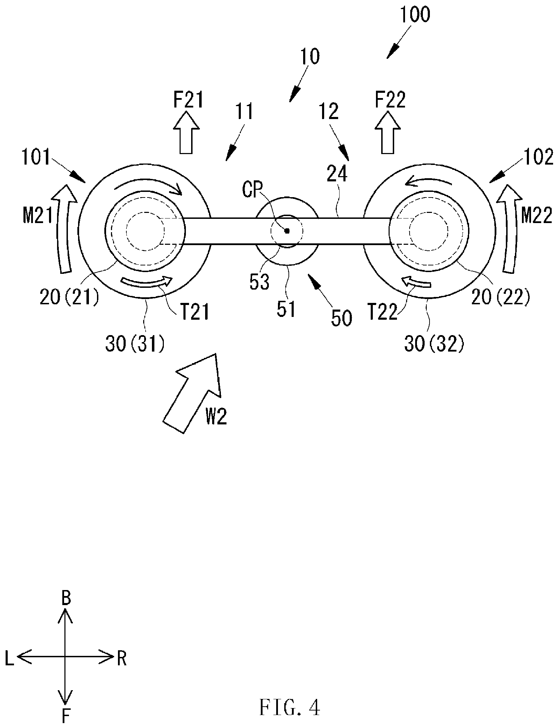

FIG. 4 shows a state in which the wind blows in a direction different from the wind W1 shown in FIG. 3, and the floating vertical-axis wind turbine system 100 receives wind W2 blowing diagonally from the front left to the back right.

Receiving the wind W2 in this state, the first wind turbine array 11 experiences wind pressure F21, and the second wind turbine array 12 experiences wind pressure F22 which is equal in magnitude to the wind pressure F21. Thus, a moment of rotation M21 about the rotation center position CP generated by the wind pressure F21 and a moment of rotation M22 about the rotation center position CP generated by the wind pressure F22 are equal in magnitude and caused in opposite directions, and hence cancel each other out.

With respect to the direction of the wind W2, the second wind turbine 22 is located on the leeward side of the first wind turbine 21, and receives the wind disturbed by the windward first wind turbine 21. As a result, the second wind turbine 22 receives interference from the first wind turbine 21, which causes the blades 222 of the second wind turbine 22 to rotate at a lower speed than the blades 212 of the first wind turbine 21. Thus, a reaction torque T22 generated by the rotation of the second wind turbine 22 becomes smaller than a reaction torque T21 generated by the rotation of the first wind turbine 21. That is, a difference is made between the reaction torques.

Thus, in the state shown in FIG. 4, the difference between the reaction torque T21 generated by the first wind turbine 21 and the reaction torque T22 generated by the second wind turbine 22 causes a clockwise moment of rotation about the rotation center position CP when viewed in plan, and the wind turbine array 10 starts to rotate in order to face the wind W2.

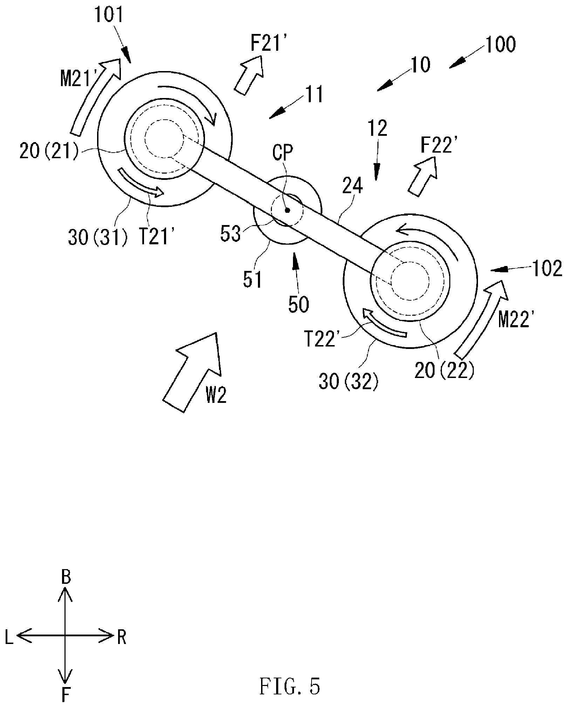

FIG. 5 shows a state in which the wind turbine array 10 has rotated from the state shown in FIG. 4, and the wind turbine array 10 is orthogonal to the wind W2, i.e., the wind turbine array 10 faces the wind W2.

Receiving the wind W2 in this state, the first wind turbine array 11 experiences wind pressure F21', and the second wind turbine array 12 experiences wind pressure F22' which is equal in magnitude to the wind pressure F21', similarly to the state of FIG. 3. Thus, a moment of rotation M21' about the rotation center position CP generated by the wind pressure F21' and a moment of rotation M22' about the rotation center position CP generated by the wind pressure F22' are equal in magnitude and caused in opposite directions, and hence cancel each other out.

In this state, the first and second wind turbines 21 and 22 receive the wind W2 without interfering with each other, and the blades 212 of the first wind turbine 21 and the blades 222 of the second wind turbine 22 rotate at equal speed. Thus, a reaction torque T21' generated by the rotation of the first wind turbine 21 and a reaction torque T22' generated by the rotation of the second wind turbine 22 are equal in magnitude and caused in opposite directions, and hence cancel each other out.

Consequently, in the state shown in FIG. 5, the wind turbine array 10 stably faces the wind W2 without rotating about the rotation center position CP.

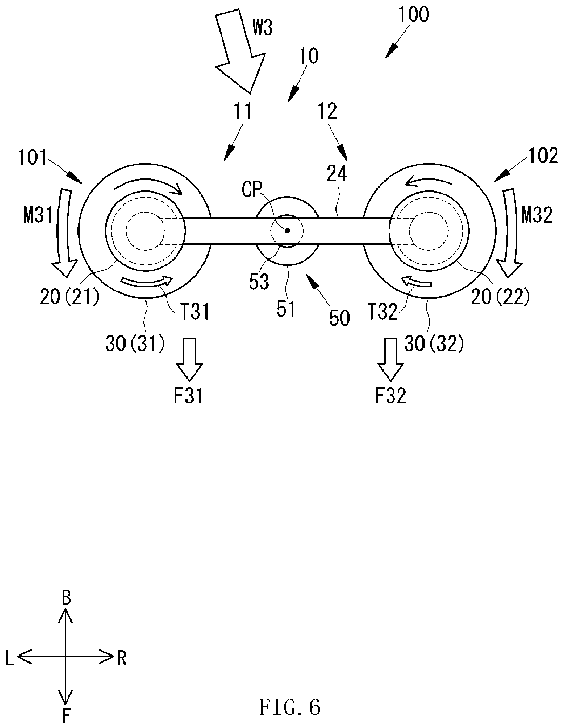

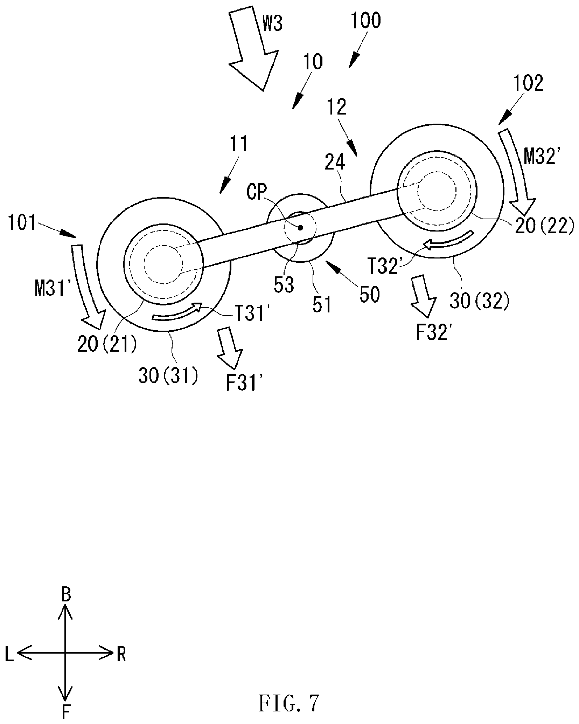

FIG. 6 shows a state in which the wind blows in a direction greatly different from the wind W1 shown in FIG. 3, and the floating vertical-axis wind turbine system 100 receives wind W3 blowing diagonally from the back left to the front right. Such a great change in the wind direction may occur, for example, when a sea wind and a land wind replace each other. In this case, by the action similar to that shown in FIGS. 4 and 5, the wind turbine array 10 stably faces the wind W3 (see FIG. 7).

First, as shown in FIG. 6, receiving the wind W3 in this state, the first wind turbine array 11 experiences wind pressure F31, and the second wind turbine array 12 experiences wind pressure F32 which is equal in magnitude to the wind pressure F31. Thus, a moment of rotation M31 about the rotation center position CP generated by the wind pressure F31 and a moment of rotation M32 about the rotation center position CP generated by the wind pressure F32 are equal in magnitude and caused in opposite directions, and hence cancel each other out.

With respect to the direction of the wind W3, the second wind turbine 22 is located on the leeward side of the first wind turbine 21, and receives the wind disturbed by the windward first wind turbine 21. As a result, the second wind turbine 22 receives interference from the first wind turbine 21, which causes the blades 222 of the second wind turbine 22 to rotate at a lower speed than the blades 212 of the first wind turbine 21. Thus, a reaction torque T32 generated by the rotation of the second wind turbine 22 becomes smaller than a reaction torque T31 generated by the rotation of the first wind turbine 21. That is, a difference is made between the reaction torques.

Thus, in the state shown in FIG. 6, the difference between the reaction torque T31 generated by the first wind turbine 21 and the reaction torque T32 generated by the second wind turbine 22 causes a counterclockwise moment of rotation about the rotation center position CP when viewed in plan, and the wind turbine array 10 starts to rotate in order to face the wind W3.

FIG. 7 shows a state in which the wind turbine array 10 has rotated from the state shown in FIG. 6, and the wind turbine array 10 is orthogonal to the wind W3, i.e., the wind turbine array 10 faces the wind W3.

Receiving the wind W3 in this state, the first wind turbine array 11 experiences wind pressure F31', and the second wind turbine array 12 experiences wind pressure F32' which is equal in magnitude to the wind pressure F31', similarly to the states shown in FIGS. 3 and 5. Thus, a moment of rotation M31' about the rotation center position CP generated by the wind pressure F31' and a moment of rotation M32' about the rotation center position CP generated by the wind pressure F32' are equal in magnitude and caused in opposite directions, and hence cancel each other out.

In this state, the first and second wind turbines 21 and 22 receive the wind W3 without interfering with each other, and the blades 212 of the first wind turbine 21 and the blades 222 of the second wind turbine 22 rotate at equal speed. Thus, a reaction torque T31' generated by the rotation of the first wind turbine 21 and a reaction torque T32' generated by the rotation of the second wind turbine 22 are equal in magnitude and caused in opposite directions, and hence cancel each other out.

Consequently, in the state shown in FIG. 7, the wind turbine array 10 stably faces the wind W3 without rotating about the rotation center position CP.

In this manner, the wind turbine array 10 stably faces the wind direction even when the direction of the wind blowing toward the floating vertical-axis wind turbine system 100 greatly changes, e.g., from the wind W1 to the wind W3. The first and second wind turbines 21 and 22 are therefore rotatable with high efficiency, without interfering with each other. This can provide high power generation efficiency.

### [Comparative Example]

In order to clarify the advantages of the floating vertical-axis wind turbine system 100 of the present embodiment, a floating wind turbine system 100X configured differently from the system of the present invention will be described below as a comparative example. The floating wind turbine system 100X which will be described below is a partially modified version of the floating vertical-axis wind turbine system 100 of the present embodiment. The floating wind turbine system 100X described below should not be taken as an example of a conventionally known technology.

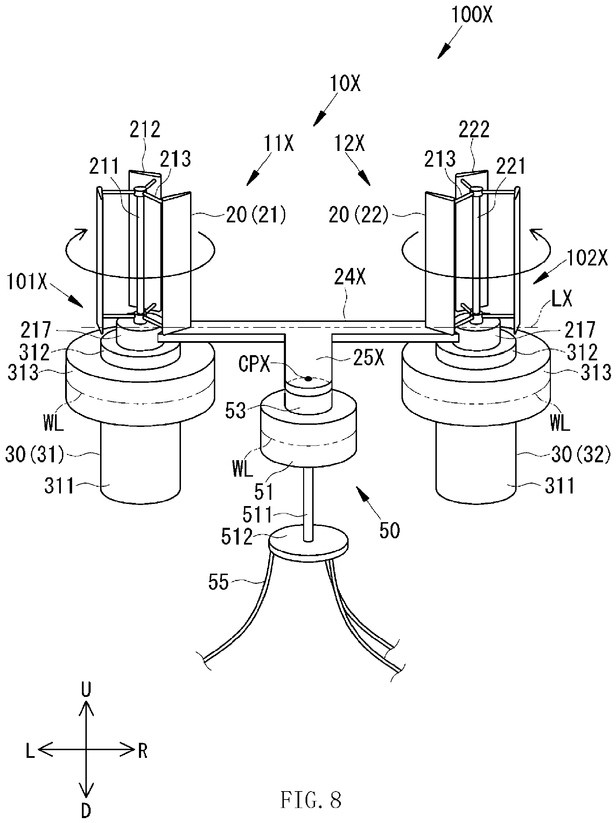

FIG. 8 is a perspective view illustrating a floating wind turbine system 100X according to a comparative example. For easy description, the same reference characters designate the same components as those of the floating vertical-axis wind turbine system 100 of the present embodiment in the drawings, and description of these components may not be repeated.

As shown in FIG. 8, the floating wind turbine system 100X is different from the floating vertical-axis wind turbine system 100 in that a rotation center CPX, which is the center of rotation of a wind turbine array 10X, is located away from a virtual straight line LX connecting the first and second wind turbines 21 and 22. A protrusion 25X is formed so as to protrude in a lateral direction from a coupling member 24X coupling the first and second wind turbines 21 and 22. The rotation center CPX is set at a free end of the protrusion 25X, and a connector 53 of a mooring device 50 is connected to the rotation center CPX.

### [Operation of Comparative Example]

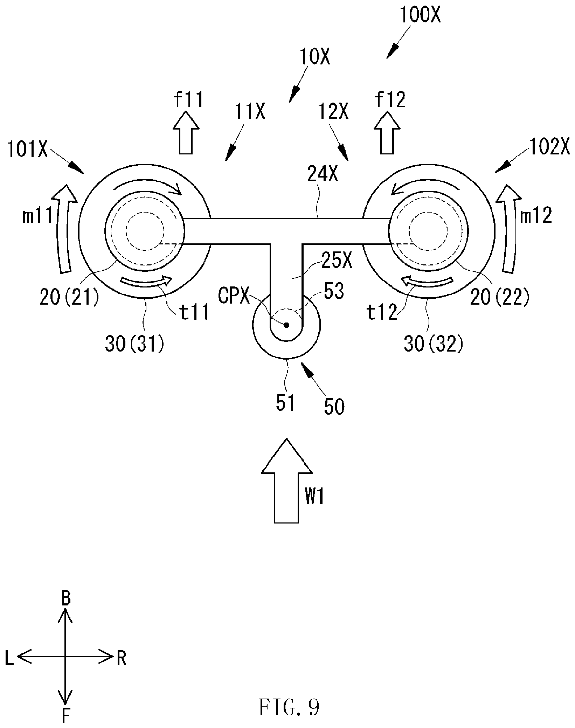

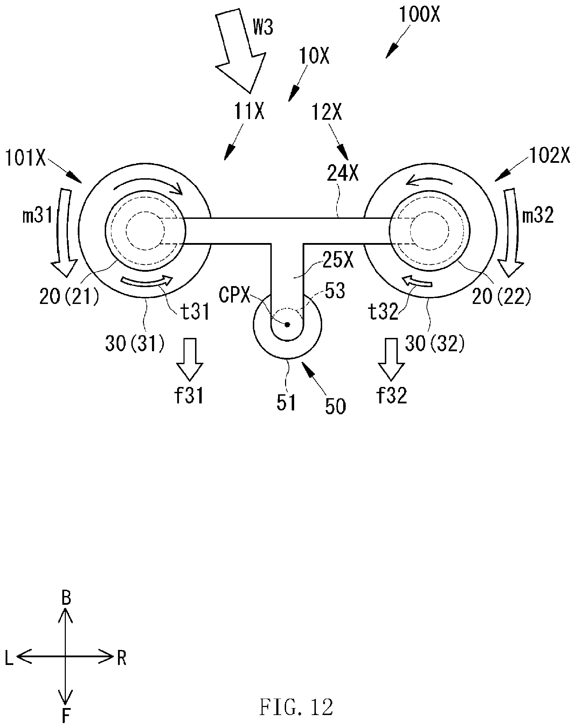

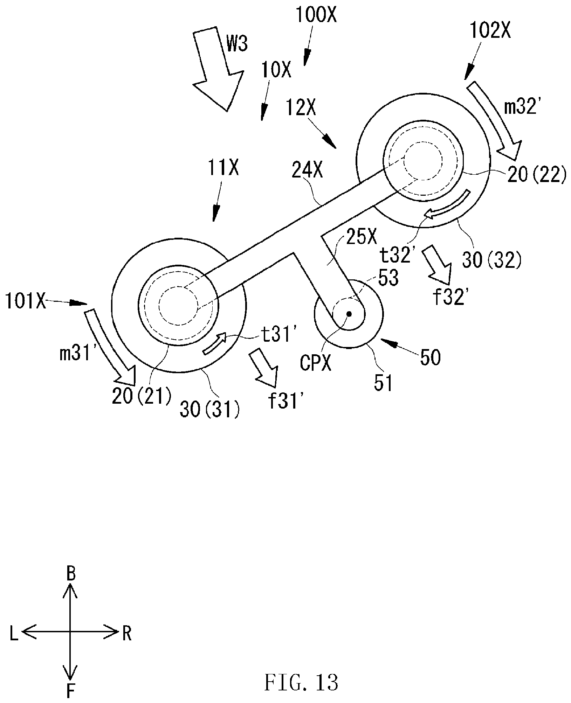

Next, how the floating wind turbine system 100X installed offshore is operated when the wind direction changes will be described below. FIGS. 9 to 13 are plan views illustrating the operation of the floating wind turbine system 100X. Receiving wind from the front (wind W1, W2) as shown in FIGS. 9 to 11, the floating wind turbine system 100X is operated to face the wind direction similarly to the floating vertical-axis wind turbine system 100 of the present embodiment (see FIGS. 3 to 5). On the other hand, receiving wind from the back (wind W3) as shown in FIGS. 12 and 13, the floating wind turbine system 100X cannot easily keep a stable posture with respect to the wind direction, and tends to become unstable, unlike the floating vertical-axis wind turbine system 100 of the present embodiment. This instability is conspicuous in a state in which the rotation center CPX, i.e., the center of the rotation of the wind turbine array 10X, is located on the leeward side of the virtual straight line LX connecting the first and second wind turbines 21 and 22.

FIG. 9 shows a state in which the floating wind turbine system 100X receives the wind W1 blowing from the front to the back. The wind turbine array 10X is orthogonal to the wind W1. That is, the wind turbine array 10 faces the wind W1.

Receiving the wind W1 in this state, the first wind turbine array 11X experiences wind pressure f11, and the second wind turbine array 12X experiences wind pressure f12 which is equal in magnitude to the wind pressure f11. Thus, a moment of rotation m11 about the rotation center CPX generated by the wind pressure f11 and a moment of rotation m12 about the rotation center CPX generated by the wind pressure f12 are equal in magnitude and caused in opposite directions, and hence cancel each other out.

The first and second wind turbines 21 and 22 receive the wind W1 without interfering with each other, and the blades 212 of the first wind turbine 21 and the blades 222 of the second wind turbine 22 rotate in the opposite directions at equal speed. Thus, a reaction torque t11 generated by the rotation of the first wind turbine 21 and a reaction torque t12 generated by the rotation of the second wind turbine 22 are equal in magnitude and caused in opposite directions, and hence cancel each other out.

In the state shown in FIG. 9, the rotation center CPX is located on the windward side of the virtual straight line LX of the wind turbine array 10X, and the posture of the wind turbine array 10X relative to the wind direction is easily stabilized. Consequently, in the state shown in FIG. 9, the wind turbine array 10X keeps facing the wind W1 without rotating about the rotation center CPX.

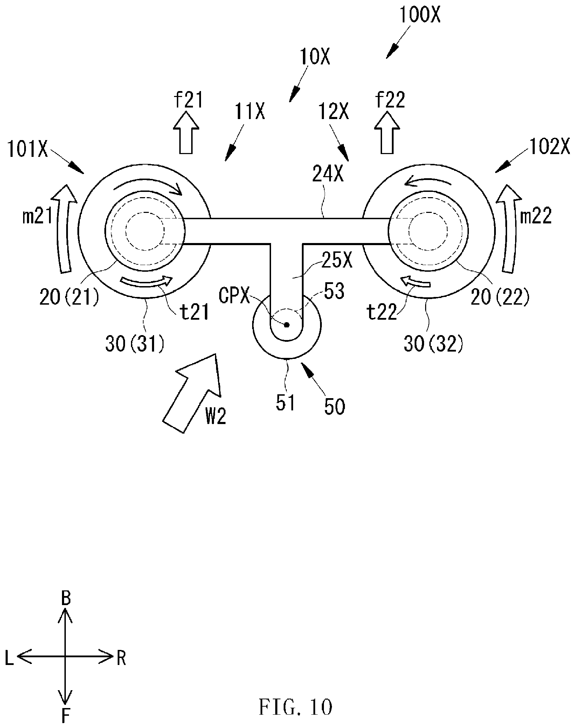

FIG. 10 shows a state in which the wind blows in a direction different from the wind W1 shown in FIG. 9, and the floating wind turbine system 100X receives wind W2 blowing diagonally from the front left to the back right.

Receiving the wind W2 in this state, the first wind turbine array 11X experiences wind pressure f21, and the second wind turbine array 12X experiences wind pressure f22 which is equal in magnitude to the wind pressure f21. Thus, a moment of rotation m21 about the rotation center CPX generated by the wind pressure f21 and a moment of rotation m22 about the rotation center CPX generated by the wind pressure f22 are equal in magnitude and caused in opposite directions, and hence cancel each other out.

With respect to the direction of the wind W2, the second wind turbine 22 is located on the leeward side of the first wind turbine 21, and receives the wind disturbed by the windward first wind turbine 21. As a result, the second wind turbine 22 receives interference from the first wind turbine 21, which causes the blades 222 of the second wind turbine 22 to rotate at a lower speed than the blades 212 of the first wind turbine 21. Thus, a reaction torque t22 generated by the rotation of the second wind turbine 22 becomes smaller than a reaction torque t21 generated by the rotation of the first wind turbine 21. That is, a difference is made between the reaction torques.

Thus, in the state shown in FIG. 10, the difference between the reaction torque t21 generated by the first wind turbine 21 and the reaction torque t22 generated by the second wind turbine 22 causes a clockwise moment of rotation about the rotation center CPX when viewed in plan, and the wind turbine array 10X starts to rotate in order to face the wind W2.

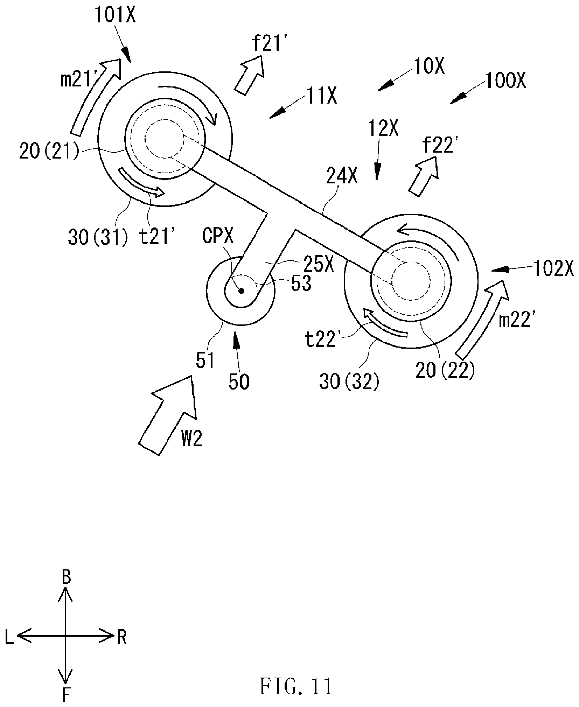

FIG. 11 shows a state in which the wind turbine array 10X has rotated from the state shown in FIG. 10, and the wind turbine array 10X is orthogonal to the wind W2, i.e., the wind turbine array 10X faces the wind W2.

Receiving the wind W2 in this state, the first wind turbine array 11X experiences wind pressure f21', and the second wind turbine array 12X experiences wind pressure f22' which is equal in magnitude to the wind pressure f21', similarly to the state of FIG. 9. Thus, a moment of rotation m21' about the rotation center CPX generated by the wind pressure f21' and a moment of rotation m22' about the rotation center CPX caused by the wind pressure f22' are equal in magnitude and caused in opposite directions, and hence cancel each other out.

The first and second wind turbines 21 and 22 receive the wind W2 without interfering with each other, and the blades 212 of the first wind turbine 21 and the blades 222 of the second wind turbine 22 rotate at equal speed. Thus, a reaction torque t21' generated by the rotation of the first wind turbine 21 and a reaction torque t22' generated by the rotation of the second wind turbine 22 are equal in magnitude and caused in opposite directions, and hence cancel each other out.

In the state shown in FIG. 11, the rotation center CPX is located on the windward side of the virtual straight line LX of the wind turbine array 10X, and the posture of the wind turbine array 10X relative to the wind direction is easily stabilized. Consequently, in the state shown in FIG. 11, the wind turbine array 10X stably faces the wind W2 without rotating about the rotation center CPX.

FIG. 12 shows a state in which the wind blows in a direction greatly different from the wind W1 shown in FIG. 9, and the floating wind turbine system 100X receives wind W3 blowing diagonally from the back left to the front right. Such a great change in the wind direction may occur, for example, when a sea wind and a land wind replace each other. In the state shown in FIG. 12, unlike the states shown in FIGS. 9 to 11, the rotation center CPX is located on the leeward side of the virtual straight line LX of the wind turbine array 10X, and the posture of the wind turbine array 10X relative to the wind direction tends to become unstable. Thus, the floating wind turbine system 100X cannot easily keep a stable posture relative to the wind direction, and tends to become unstable, unlike the floating vertical-axis wind turbine system 100 of the present embodiment.

First, receiving the wind W3 in the state shown in FIG. 12, the first wind turbine array 11X experiences wind pressure f31, and the second wind turbine array 12X experiences wind pressure f32 which is equal in magnitude to the wind pressure f31. Thus, a moment of rotation m31 about the rotation center CPX generated by the wind pressure f31 and a moment of rotation m32 about the rotation center CPX caused by the wind pressure f32 are equal in magnitude and caused in opposite directions, and hence cancel each other out.

With respect to the direction of the wind W3, the second wind turbine 22 is located on the leeward side of the first wind turbine 21, and receives the wind disturbed by the windward first wind turbine 21. As a result, the second wind turbine 22 receives interference from the first wind turbine 21, which causes the blades 222 of the second wind turbine 22 to rotate at a lower speed than the blades 212 of the first wind turbine 21. Thus, a reaction torque t32 generated by the rotation of the second wind turbine 22 becomes smaller than a reaction torque t31 generated by the rotation of the first wind turbine 21. That is, a difference is made between the reaction torques.

Thus, in the state shown in FIG. 12, the difference between the reaction torque t31 generated by the first wind turbine 21 and the reaction torque t32 generated by the second wind turbine 22 causes a counterclockwise moment of rotation about the rotation center CPX when viewed in plan, and the wind turbine array 10X starts to rotate in order to face the wind W3.

However, due to its instability, the wind turbine array 10X is not stabilized even when rotated to a position facing the wind W3, and rotates beyond the position facing the wind W3. FIG. 13 shows a state in which the wind turbine array 10X has rotated from the state shown in FIG. 12, and the wind turbine array 10X has passed the position facing the wind W3.

This state is opposite to the state shown in FIG. 12. Receiving the wind W3, the first wind turbine array 11X experiences wind pressure f31', and the second wind turbine array 12X experiences wind pressure f32' which is equal in magnitude to the wind pressure f31'. Thus, a moment of rotation m31' about the rotation center CPX generated by the wind pressure f31' and a moment of rotation m32' about the rotation center CPX generated by the wind pressure f32' are equal in magnitude and caused in opposite directions, and hence cancel each other out.

With respect to the direction of the wind W3, the first wind turbine 21 is located on the leeward side of the second wind turbine 22, and receives the wind disturbed by the windward second wind turbine 22. As a result, the first wind turbine 21 receives interference from the second wind turbine 22, which causes the blades 212 of the first wind turbine 21 to rotate at a lower speed than the blades 222 of the second wind turbine 22. Thus, a reaction torque t31' generated by the rotation of the first wind turbine 21 becomes smaller than a reaction torque t32' generated by the rotation of the first wind turbine 21. That is, a difference is made between the reaction torques.

Thus, in the state shown in FIG. 13, the difference between the reaction torque t31' generated by the first wind turbine 21 and the reaction torque t32' generated by the second wind turbine 22 causes a clockwise moment of rotation about the rotation center CPX when viewed in plan, and the wind turbine array 10X starts to rotate in order to face the wind W3. However, due to its instability, the wind turbine array 10X rotates beyond the position facing the wind W3, and returns to the state shown in FIG. 12. Thus, the wind turbine array 10X tends to be in an unstable state in which the state of FIG. 12 and the state of FIG. 13 are repeated.

In this manner, when the direction of the wind blowing toward the floating wind turbine system 100X greatly changes, e.g., from the wind W1 to the wind W3, and the rotation center CPX is located on the leeward side of the virtual straight line LX, the wind turbine array 10X cannot keep a stable posture relative to the wind direction, and tends to keep moving unstably. In this state, the first and second wind turbines 21 and 22 interfere with each other, and cannot rotate with high efficiency. This lowers the power generation efficiency.

### [Water Area Required for Installation]

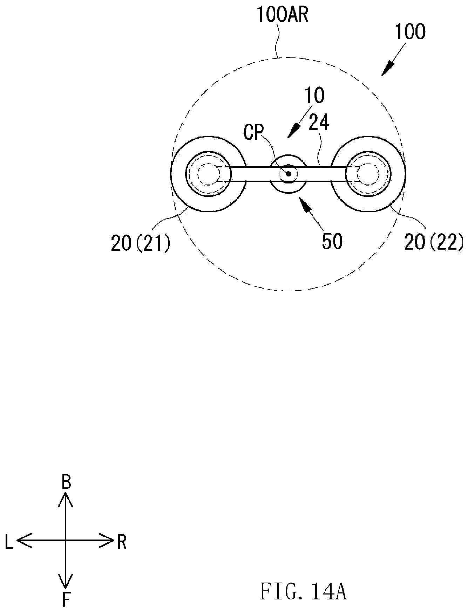

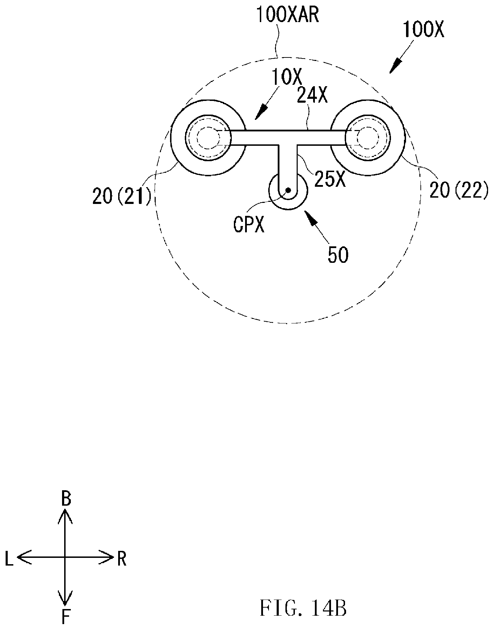

FIG. 14A is a plan view illustrating a moving range of the floating vertical-axis wind turbine system 100 according to the present embodiment. FIG. 14A shows a moving range 100AR of the floating vertical-axis wind turbine system 100 when the wind turbine array 10 rotates about the rotation center position CP. FIG. 14B shows a moving range 100XAR of the floating wind turbine system 100X when the wind turbine array 10X rotates about the rotation center CPX for comparison.

As shown in FIG. 14A, the floating vertical-axis wind turbine system 100 includes the first and second wind turbines 21 and 22 and the rotation center position CP which are arranged on the virtual straight line L. Thus, the moving range 100AR is small. On the other hand, the floating wind turbine system 100X includes the first and second wind turbines 21 and 22 and the rotation center CPX which are located apart from the virtual straight line L. Thus, the moving range 100XAR is larger than the moving range 100AR.

When the direction of the wind received by the floating vertical-axis wind turbine system 100 changes, the wind turbine array 10 may possibly move within the moving range 100AR. For this reason, in the case of installing a plurality of floating vertical-axis wind turbine systems 100, or in the case of installing the floating vertical-axis wind turbine system 100 at a position adjacent to a different structure (e.g., an offshore facility requiring electric power generated by the wind power generation), the moving range 100AR needs to be blocked from interference from the other floating vertical-axis wind turbine systems 100 or the different structure.

The floating vertical-axis wind turbine system 100 has the small moving range 100AR. Thus, in the case of installing a plurality of floating vertical-axis wind turbine systems 100, they can be arranged at an increased density, which can reduce the water area required for the installation of the floating vertical-axis wind turbine systems 100. Further, in the case of installing the floating vertical-axis wind turbine system 100 at a position adjacent to a different structure, the floating vertical-axis wind turbine system 100 can be brought close to the structure, which can reduce the water area required for the installation of the floating vertical-axis wind turbine system 100.

### [Advantages of First Embodiment]

The wind turbine array 10 including the plurality of vertical-axis wind turbines 20 (the first and second wind turbines 21 and 22) supported on the water surface by the floating bodies 30 (the first and second floating support bodies 31 and 32) is moored at one point so as to be rotatable at the rotation center position CP. The rotation center position CP is set such that the moment of rotation about the rotation center position CP is canceled out in a state in which the wind turbine array 10 is orthogonal to the wind direction, i.e., in a state in which the wind turbine array 10 faces the wind. In a case in which only the wind direction changes from the state in which the wind turbine array 10 faces the wind direction, a moment of rotation about the rotation center position CP generated at the first end 101 of the wind turbine array 10 becomes different from a moment of rotation about the rotation center position CP generated at the second end 102 of the wind turbine array 10, causing imbalance between the moments of rotation about the rotation center position CP. This causes the wind turbine array 10 to rotate to a position where the moments of rotation about the rotation center position CP at the first and second ends 101 and 102 are balanced and cancel each other out, i.e., to a position where the wind turbine array 10 faces the wind direction.

Since the wind turbine array 10 is moored at one point so as to be rotatable at the rotation center position CP, the wind turbine array 10 rotates to face the wind direction in response to the change in the wind direction, even if the change is significant.

This allows the wind turbine array 10 to keep facing the wind direction without using any driving force or control mechanism, and can block the plurality of vertical-axis wind turbines 20 (the first and second wind turbines 21 and 22) from interfering with each other.

Since the wind turbine array 10 is moored at one point so as to be rotatable at the rotation center position CP, the wind turbine array 10 rotates within a range of a circle centered on the rotation center position CP. This can reduce the water area required for the installation of the floating vertical-axis wind turbine system 100.

In addition, the mooring device 50 and the wind turbine array 10 are rotatably coupled to each other, and thus, the mooring device 50 has little effect on the rotation of the wind turbine array 10. This configuration can simplify the configuration of the mooring device 50, and can reduce the installation cost of the floating vertical-axis wind turbine system 100.

The first and second wind turbine arrays 11 and 12 have an equal lateral area with respect to the rotation center position CP. Thus, when the wind acts on the wind turbine array 10, the first and second wind turbine arrays 11 and 12 receive an equal wind pressure, which allows the wind turbine array 10 to easily face the wind direction.

The first and second wind turbine arrays 11 and 12 constituting the wind turbine array 10 are symmetric with respect to the rotation center position CP (center of gravity). Thus, when the wind acts on the wind turbine array 10, the first and second wind turbine arrays 11 and 12 receive an equal wind pressure, which allows the wind turbine array 10 to easily face the wind direction. Further, the blades 212 and 222 of the vertical-axis wind turbines 20 (the first and second wind turbines 21 and 22) constituting the first and second wind turbine arrays 11 and 12 are configured to rotate in opposite directions. This allows the wind turbine array 10 to easily face the wind direction using the moments of rotation generated by the rotation of the blades 212 and 222.

The plurality of vertical-axis wind turbines 20 (the first and second wind turbines 21 and 22) are supported on the water surface by the floating bodies 30 (the first and second floating support bodies 31 and 32) respectively provided for the vertical-axis wind turbines 20 (the first and second wind turbines 21 and 22). This can simplify the configuration of the wind turbine array 10. In addition, this configuration can easily address the case where multiple vertical-axis wind turbines need to be used, and the case where the number of vertical-axis wind turbines needs to be increased.

The wind turbine array 10 is moored to the floating mooring body 51 provided for the mooring device 50. This configuration allows the wind turbine array 10 to be easily moored to the mooring device 50 which has been installed, and also allows the wind turbine array 10 to be separated from the mooring device 50 that is kept installed. This can facilitate the installation and maintenance of the floating vertical-axis wind turbine system 100.

### [Variations]

The floating vertical-axis wind turbine system of the present invention is not limited to the above-described embodiment. For example, the shapes, number, and arrangement of the vertical-axis wind turbine, floating body, and mooring device of the floating vertical-axis wind turbine system are not limited to those described in the present embodiment, but limited to the scope of the claims.

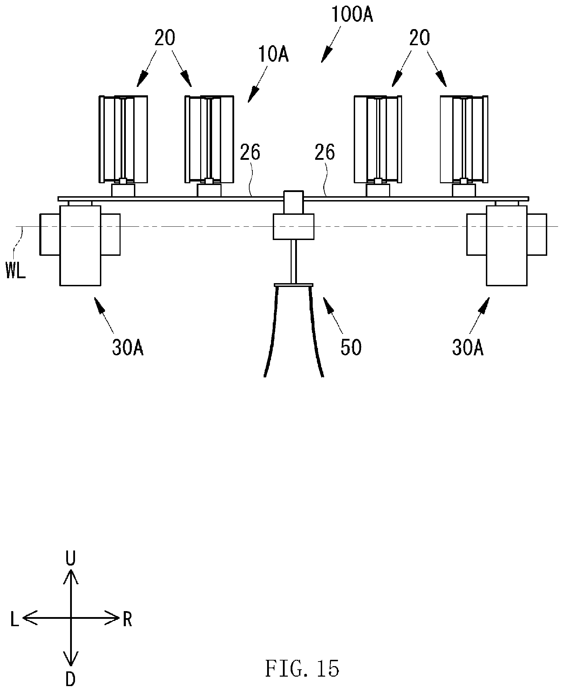

In a floating vertical-axis wind turbine system 100A shown in FIG. 15, a wind turbine array 10A includes four vertical-axis wind turbines 20. The four vertical-axis wind turbines 20 are supported by a support member 26. The support member 26 is supported by two floating bodies 30A.

In this case, a plurality of vertical-axis wind turbines 20 are mounted on the common support member 26, which is supported by the floating body 30A. This can reduce the number of floating bodies 30A with respect to the number of vertical-axis wind turbines 20 (i.e., two floating bodies 30A for four vertical-axis wind turbines 20), and can simplify the configuration of the floating vertical-axis wind turbine system 200.

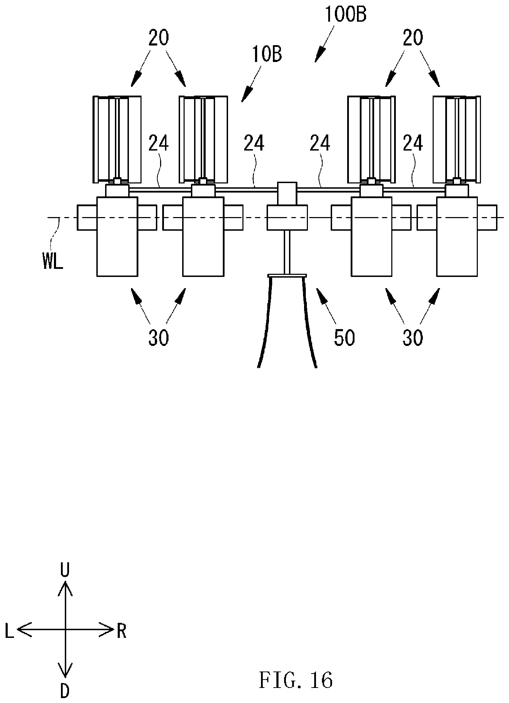

A floating vertical-axis wind turbine system 100B shown in FIG. 16 includes: four floating bodies 30, on each of which a vertical-axis wind turbine 20 is mounted; and coupling members 24 which couple the floating bodies 30 to one another. This configuration can easily address the case where multiple vertical-axis wind turbines 20 needs to be used, and the case where the number of vertical-axis wind turbines 20 needs to be increased.

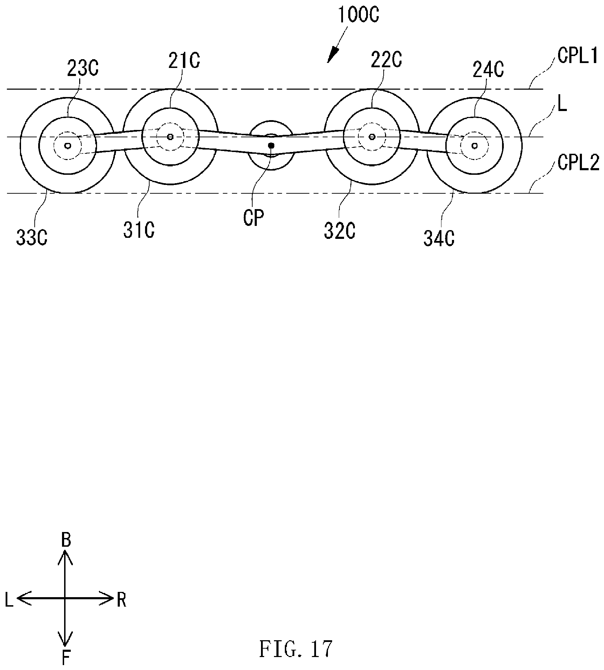

As an example of the arrangement of the plurality of vertical-axis wind turbines 21 and 22, it has been described in the above embodiment that the rotary shafts 211 and 221 are arranged on the virtual straight line L, but this arrangement is a non-limiting example. According to the present invention, the plurality of vertical-axis wind turbines may be arranged in any way as long as they are substantially on a virtual straight line. For example, as shown in FIG. 17, wind turbines (21C, 22C, 23C, and 24C) may be arranged such that a virtual straight line L passes within the range of the radii of rotation of the blades of the wind turbines (21C, 22C, 23C, and 24C). If the wind turbines are arranged such that the virtual straight line passes within the range of the radii of rotation of the blades, it can be said that the plurality of vertical-axis wind turbines are arranged substantially on the virtual straight line.

It has been described in the above embodiment that the rotation center position CP is set on the virtual straight line L and at the center of gravity of the wind turbine array, but this is a non-limiting example. The rotation center position according to the present invention is set on or near the virtual straight line such that a moment of rotation about the rotation center position is canceled out in a state in which the wind turbine array is orthogonal to the wind acting on the wind turbine array. Thus, the rotation center position CP may be set to be the center of a hydrodynamic force on the wind turbine array. For example, as shown in FIG. 17, the center of hydrodynamic force on the wind turbine array may be present within a range defined between two tangential lines (i.e., straight lines CPL1 and CPL2), of the floating bodies (31C, 32C, 33C, and 34C), which are farthest from the virtual straight line L.

The center of hydrodynamic force acting on each combination of the wind turbine and the floating body (i.e., the center of the resultant of the force which the wind turbine receives from the air and the hydrodynamic force which the floating body receives from the air and the water) is at least present on the floating body when viewed in plan. This means that the center of hydrodynamic force on the wind turbine array is present within the range defined between the straight lines CPL1 and CPL2.

Specifically, when viewed in plan, the center of aerodynamic force acting on each wind turbine (the center of the force received from the air) is not necessarily on the rotary shaft due to mechanical and structural variations of the wind turbines, but is at least present within the range of the radius of rotation of the blades of each wind turbine. Further, when viewed in plan, the center of hydrodynamic force acting on each floating body (the center of the resultant of the force which a portion of the floating body above the waterline receives from the air and the force which a portion of the floating body below the waterline receives from the water) is not necessarily the center of the floating body due to the structural variations of the floating bodies, but is at least present on the floating body. Thus, the center of hydrodynamic force acting on each combination of the wind turbine and the floating body (i.e., the center of the resultant of the force which the wind turbine receives from the air and the hydrodynamic force which the floating body receives from the air and the water) is also at least present on the floating body, and the center of hydrodynamic force on the wind turbine array is also within the range defined between the straight lines CPL1 and CPL2. Consequently, the rotation center position CP, which is set such that the moment of rotation is canceled out in a state in which the wind turbine array is orthogonal to the wind acting thereon, can be set to the center of hydrodynamic force which is present within the range defined between the tangential lines, of the floating bodies, which are farthest from the virtual straight line L.

Even if the rotation center position CP is not on the virtual straight line L of the wind turbine array, the increase in the water area required for the installation of the floating vertical-axis wind turbine system can be reduced as long as the rotation center position CP is set near the virtual straight line L. For example, when the distance from the virtual straight line L to the rotation center position CP is 5% of the total length of the wind turbine array, the rate of increase in the water area is 1% compared to the case where the rotation center position CP is on the virtual straight line L. An increase in the water area required for the installation is therefore substantially prevented.

The embodiments of the present invention that have just described above are merely examples for carrying out the present invention. The present invention is not limited to the embodiments described above, and can be implemented through appropriate modifications of the embodiments without departing from the scope of the present invention which is defined by the appended claims.

### INDUSTRIAL APPLICABILITY

The present invention is applicable to a floating vertical-axis wind turbine system equipped with a plurality of vertical-axis wind turbines.

### DESCRIPTION OF REFERENCE CHARACTERS

- 100: Floating Vertical-Axis Wind Turbine System
- 10: Wind Turbine Array
- 20: Vertical-Axis Wind Turbine
- 21: First Wind Turbine
- 22: Second Wind Turbine
- 24: Coupling Member
- 30: Floating Body
- 31: First Floating Support Body
- 32: Second Floating Support Body
- 50: Mooring Device
- 51: Floating Mooring Body
- 53: Connector
- 55: Mooring Line

## Claims

1. A floating vertical-axis wind turbine system (100), comprising:
a wind turbine array (10, 11, 12) including a plurality of vertical-axis wind turbines (20, 21, 22) each having a rotary shaft (211, 221) extending in a vertical direction, a plurality of blades (212, 222) rotatable about the rotary shaft, and a floating body (30) configured to support the plurality of vertical-axis wind turbines on a water surface by buoyancy, the floating body is provided for each of the vertical-axis wind turbines, the plurality of vertical-axis wind turbines arranged such that a virtual straight line (L) extending in a horizontal direction passes within a turning radius of the wind turbines blades; and
a mooring device (50) configured to moor the wind turbine array so as to be rotatable relative to the water surface at a rotation center position (CP) which is set between a first end (101) of the wind turbine array and a second end (102) of the wind turbine array and either on the virtual straight line or in the center of hydrodynamic force on the wind turbine array which is present within the range defined between two straight lines (CPL1 and CPL2) tangential to the floating bodies farthest from the virtual straight line, wherein the first end being one of the ends of the wind turbine array, the second end being the other end of the wind turbine array,
wherein the rotation center position is set such that a moment of rotation about the rotation center position is canceled out in a state in which the wind turbine array is orthogonal to wind acting on the wind turbine array,
wherein assuming that a portion of the wind turbine array toward the first end with respect to the rotation center position is a first wind turbine array (11), and a portion of the wind turbine array toward the second end with respect to the rotation center position is a second wind turbine array (12), the first wind turbine array and the second wind turbine array have an equal lateral area,
wherein the vertical-axis wind turbine, of said plurality of vertical-axis wind turbines, constituting the first wind turbine array and the vertical-axis wind turbine, of said plurality of vertical-axis wind turbines, constituting the second wind turbine array are the same in shape and number, and are arranged symmetrically with respect to the rotation center position, the blades of the vertical-axis wind turbine constituting the first wind turbine array and the blades of the vertical-axis wind turbine constituting the second wind turbine array being arranged to rotate in opposite directions, and the rotation center position is set to be a center of gravity of the wind turbine array,
the wind turbine array further comprising a coupling member (24) coupling the vertical-axis wind turbine constituting the first wind turbine array and the vertical-axis wind turbine constituting the second wind turbine array,
**characterized in that** the coupling member (24) is arranged to be, in use, completely above the waterline (WL).

2. The floating vertical-axis wind turbine system of claim 1, wherein
the mooring device comprises:
a mooring line (55); and
a floating mooring body (51) connected to the mooring line,
wherein
the wind turbine array is rotatably moored to the floating mooring body at the rotation center position.

## Patentansprüche

1. Schwimmendes, vertikalachsiges Windturbinensystem (100), aufweisend:
eine Windturbinenanordnung (10, 11, 12) mit mehreren vertikalachsigen Windturbinen (20, 21, 22), die jeweils eine sich in vertikaler Richtung erstreckende Drehwelle (211, 221), mehrere um die Drehwelle drehbare Schaufeln (212, 222) und einen Schwimmkörper (30) aufweisen, der zum Tragen der mehreren vertikalachsigen Windturbinen durch Auftrieb auf einer Wasseroberfläche konfiguriert ist, der Schwimmkörper für jede der vertikalachsigen Windturbinen vorgesehen ist, wobei die mehreren vertikalachsigen Windturbinen so angeordnet sind, dass eine virtuelle Gerade (L), die sich in einer horizontalen Richtung erstreckt, innerhalb eines Drehradius der Windturbinenschaufeln verläuft; und
eine Verankerungsvorrichtung (50), die so zum Verankern der Windturbinenanordnung konfiguriert ist, dass diese relativ zur Wasseroberfläche an einer Rotationszentrumsposition (CP) drehbar ist, die zwischen einem ersten Ende (101) der Windturbinenanordnung und einem zweiten Ende (102) der Windturbinenanordnung und entweder auf der virtuellen Geraden oder im Zentrum der hydrodynamischen Kraft auf die Windturbinenanordnung, die innerhalb des Bereichs, der als zwischen zwei Geraden (CPL1 und CPL2) tangential zu den Schwimmkörpern am weitesten von der virtuellen Geraden entfernt definiert ist, eingestellt ist, wobei das erste Ende das eine der Enden der Windturbinenanordnung und das zweite Ende das andere Ende der Windturbinenanordnung ist,
wobei die Rotationszentrumsposition so eingestellt ist, dass ein Drehmoment um die Rotationszentrumsposition in einem Zustand, in dem die Windturbinenanordnung orthogonal zu dem auf die Windturbinenanordnung wirkenden Wind ist, aufgehoben wird, wobei unter der Annahme, dass ein Teil der Windturbinenanordnung in Richtung des ersten Endes in Bezug auf die Rotationszentrumsposition eine erste Windturbinenanordnung (11) ist und ein Teil der Windturbinenanordnung in Richtung des zweiten Endes in Bezug auf die Rotationszentrumsposition eine zweite Windturbinenanordnung (12) ist, wobei die erste Windturbinenanordnung und die zweite Windturbinenanordnung eine gleiche Seitenfläche aufweisen,
wobei die vertikalachsige Windturbine der mehreren vertikalachsigen Windturbinen, die die erste Windturbinenanordnung bilden, und
die vertikalachsige Windturbine der mehreren vertikalachsigen Windturbinen,
die die zweite Windturbinenanordnung bilden, in Form und Anzahl gleich und symmetrisch in Bezug auf die Rotationszentrumsposition angeordnet sind, wobei die Schaufeln der vertikalachsigen Windturbinen, die die erste Windturbinenanordnung bilden, und die Schaufeln der vertikalachsigen Windturbinen, die die zweite Windturbinenanordnung bilden, so angeordnet sind, dass sie sich in entgegengesetzte Richtungen drehen, und die Rotationszentrumsposition so eingestellt ist, dass sie ein Schwerpunkt der Windturbinenanordnung ist,
die Windturbinenanordnung ferner ein Kopplungselement (24) aufweist, das die vertikalachsigen Windturbinen, die die erste Windturbinenanordnung bilden, und die vertikalachsigen Windturbinen, die die zweite Windturbinenanordnung bilden, koppelt,
**dadurch gekennzeichnet, dass** das Kopplungselement (24) so angeordnet ist, dass es sich im Gebrauch vollständig oberhalb der Wasserlinie (WL) befindet.

2. Schwimmendes vertikalachsiges Windturbinensystem nach Anspruch 1, wobei die Verankerungsvorrichtung aufweist:
eine Verankerungsleine (55); und
einen schwimmenden Verankerungskörper (51), der mit der Verankerungsleine verbunden ist,
wobei die Windturbinenanordnung in der Rotationszentrumsposition drehbar an dem schwimmenden Verankerungskörper verankert ist.

## Revendications

1. Système de turbine éolienne à axe vertical flottant (100) comprenant :
un réseau de turbines éoliennes (10, 11, 12) incluant une pluralité de turbines éoliennes à axe vertical (20, 21, 22) ayant chacune un arbre rotatif (211, 221) s'étendant dans une direction verticale, une pluralité de pales (212, 222) rotatives autour de l'arbre rotatif, et un corps flottant (30) configuré pour supporter la pluralité de turbines éoliennes à axe vertical sur une surface de l'eau par flottaison, le corps flottant est prévu pour chacune des turbines éoliennes à axe vertical, la pluralité de turbines éoliennes à axe vertical étant agencée de sorte qu'une ligne droite virtuelle (L) s'étendant dans une direction horizontale passe dans un rayon de braquage des pales de turbine éolienne ; et
un dispositif d'amarrage (50) configuré pour amarrer le réseau de turbines éoliennes de sorte qu'il soit rotatif par rapport à la surface de l'eau dans une position du centre de rotation (CP) qui est définie entre une première extrémité (101) du réseau de turbines éoliennes et une seconde extrémité (102) du réseau de turbines éoliennes et chacune sur la ligne droite virtuelle ou dans le centre de force hydrodynamique sur le réseau de turbines éoliennes qui est présente dans la plage définie entre deux lignes droites (CPL1 et CPL2) tangentielles aux corps flottants le plus loin de la ligne droite virtuelle, dans lequel la première extrémité étant une des extrémités du réseau de turbines éoliennes, la seconde extrémité étant l'autre extrémité du réseau de turbines éoliennes,
dans lequel la position du centre de rotation est définie de sorte qu'un couple de rotation autour de la position du centre de rotation soit annulé dans un état, dans lequel le réseau de turbines éoliennes est orthogonal au vent agissant sur le réseau de turbines éoliennes,
dans lequel à supposer qu'une portion du réseau de turbines éoliennes vers la première extrémité par rapport à la position du centre de rotation est un premier réseau de turbines éoliennes (11), et une portion du réseau de turbines éoliennes vers la seconde extrémité par rapport à la position du centre de rotation est un second réseau de turbines éoliennes (12), le premier réseau de turbines éoliennes et le second réseau de turbines éoliennes présentent une zone latérale égale,
dans lequel la turbine éolienne à axe vertical, de ladite pluralité de turbines éoliennes à axe vertical, constituant le premier réseau de turbines éoliennes et la turbine éolienne à axe vertical, de ladite pluralité de turbines éoliennes à axe vertical, constituant le second réseau de turbines éoliennes sont identiques en forme et nombre, et sont agencées symétriquement par rapport à la position du centre de rotation, les pales de turbine éolienne à axe vertical constituant le premier réseau de turbines éoliennes et les pales de turbine éolienne à axe vertical constituant le second réseau de turbines éoliennes étant agencées pour tourner dans des directions opposées, et la position du centre de rotation est définie comme étant un centre de gravité du réseau de turbines éoliennes,
le réseau de turbines éoliennes comprenant en outre un élément de couplage (24) couplant la turbine éolienne à axe vertical constituant le premier réseau de turbines éoliennes et la turbine éolienne à axe vertical constituant le second réseau de turbines éoliennes,
**caractérisé en ce que** l'élément de couplage (24) est agencé pour être, en utilisation, complètement au-dessus de la ligne d'eau (WL).

2. Système de turbine éolienne à axe vertical flottant selon la revendication 1, dans lequel le dispositif d'amarrage comprend :
une ligne d'amarrage (55) ; et
un corps d'amarrage flottant (51) relié à la ligne d'amarrage,
dans lequel
le réseau de turbines éoliennes est amarré de manière rotative au corps d'amarrage flottant dans la position du centre de rotation.
